# EUROPÄISCHE PATENTSCHRIFT

(11) **EP 3 072 003 B1**
(45) Veröffentlichungstag und Bekanntmachung des Hinweises auf die Patenterteilung: **30.12.2020**
(21) Anmeldenummer: 14828129.8
(22) Anmeldetag: 23.11.2014
(51) Int. Cl.: G02B 7/08, G02B 7/10

(54) **MOTORISCHER VERSTELLANTRIEB FÜR OBJEKTIV**
MOTORIZED ADJUSTING DRIVE FOR AN OBJECTIVE
ENTRAÎNEMENT DE RÉGLAGE MOTORISÉ POUR OBJECTIF

(30) Priorität: 24.11.2013 DE 102013112957; 26.06.2014 DE 102014108969
(43) Veröffentlichungstag der Anmeldung: 28.09.2016
(73) Patentinhaber: Leica Camera AG, 35578 Wetzlar (DE)
(72) Erfinder: GRABAU, Torsten, 35580 Wetzlar (DE)
(74) Vertreter: Stamer, Jan
(86) Internationale Anmeldenummer: PCT/DE2014/100411
(87) Internationale Veröffentlichungsnummer: WO 2015/074647

(56) Entgegenhaltungen:
- EP-A1- 1 884 813
- WO-A1-2005/069053
- DE-A1- 19 718 189
- JP-A- S6 335 153

## Beschreibung

Die Erfindung betrifft ein Objektiv mit elektromotorischem Antrieb zur Verstellung von optischen Elementen entlang einer optischen Achse gemäß dem Oberbegriff des Anspruchs 1.

Elektromotorische Antriebe sind in verschiedenen Ausführungsformen zur Fokussierung und Brennweitenverstellung von fotografischen Objektiven bekannt. Dabei kommen vornehmlich klein bauende kompakte DC-Motoren, Ultraschallmotoren und Schrittmotoren mit Getriebeeinheiten zum Einsatz.

Ebenso sind als Antrieb Ultraschallmotoren bekannt, die als Ringmotoren ausgebildet am Umfang einer Fassung eines Objektivs angeordnet sind. Ringmotoren treiben meist mit Getriebeübersetzung die zur axialen Verstellung vorgesehenen Fokussier- und Brennweitenverstellelemente in axialer Richtung an. Sie benötigen eine aufwändige elektronische Regelung mit hohen elektrischen Spannungen. Mechanische Reibung zwischen Stator und Rotor erzeugen Verschmutzung im Innern des Objektivtubus und beeinträchtigen durch Ablagerung auf den optischen Elementen die Abbildungsleistung.

Aus der Druckschrift DE 197 18 189 A1 ist eine Vorrichtung zur axialen Lageveränderung eines optischen Abbildungssystems bekannt. Das optische Abbildungssystem ist innerhalb eines Trageringes angeordnet, der in einem Gehäuse längsverschieblich geführt ist. In der Außenumfangsfläche des Trageringes sind Magnetelemente angeordnet, die einem am Außenumfang des Gehäuses steuerbar angeordneten Magnetfeld folgen und dadurch den Tragering mit dem Abbildungssystem axial verschieben.

Aus EP 1 884 813 A1 ist ein elektromagnetischer Antrieb zur axialen Verstellung eines in einer Fassung gehaltenen optischen Abbildungssystems bekannt. Der elektromotorische Antrieb besteht aus einer parallel zur optischen Achse des Abbildungssystems gewickelten Spulenanordnung und einem als Bogensegment die optische Achse umgreifenden Permanentmagneten. Die Spulenanordnung und der Permanentmagnet haben einen gemeinsamen Eisenrückschluss. Bei Bestromung der Spulenwicklung bewegt sich diese über das Bogensegment des Permanentmagneten und verstellt dabei über eine in einem Kurventräger geführte Stift-/Schlitz-Kopplung die Fassung des optischen Abbildungssystems.

Aufgabe der Erfindung war es, einen wartungsfreien und geräuscharmen Antrieb zur axialen Positionierung von bewegten Elementen in einem Objektivtubus zu schaffen, der ohne Motorgetriebe zur Übersetzung der Motordrehzahl auf eine Fokussierbewegung nutzbar ist. Eine weitere Aufgabe war es, ein Antriebssystem mit besserem Wirkungsgrad bei der Umsetzung von elektrischer in mechanische Bewegungsenergie bereitzustellen, welches die Nachteile der Antriebe des Standes der Technik vermeidet. Das große Volumen und die hohe Masse waren zu verkleinern.

Diese Aufgabe wird durch ein Objektiv mit einer Fassung und einem Antrieb gemäß dem Kennzeichen des Anspruchs 1 gelöst. Vorteilhafte Weiterbildungen und Ausgestaltungen sind Gegenstand der Unteransprüche. In vorteilhafter Weise ist der Antrieb als elektromotorischer bürstenloser Hohlwellenantrieb ausgebildet. Auf diese Weise ist ein geräuscharmer Motor realisiert, der gleichzeitig kompakt gebaut ist.

Wesentliche Erkenntnis ist die Eignung für eine Verwendung eines solchen Hohlwellenantriebs für motorische Verstellungen in optischen, Systemen wie zum Beispiel Objektiven, Okularen, monokularen oder binokularen fernoptischen Geräten. Die Erfindung macht sich die Erkenntnis zu Nutze, dass der durchgängig offene Innendurchmesser eines Hohlwellenmotors für in ihm über einen Kurventräger bewegbar gelagerte, in einer inneren Fassung gehaltene optische Elemente genutzt werden kann, wobei der Hohlwellenmotor den Kurventräger antreibt und die innere Fassung für sich gerad geführt werden kann.

Die Energiedichte in herkömmlichen Hohlwellen Motoren wird vorteilhaft durch starke Permanent-Magnete als Teile des Rotors, wie z.B. Neodym Magnete, die aus NdFeB Materialien hergestellt sind, erhöht. Der Motor ist aufgrund der Verwendung einer sehr dünnwandigen (die Stärke der Wandung des Zylinders beträgt kleiner 10% des offenen Durchmessers) Zylinderspule als Stator sehr schlank gebaut. Der Bauraum für innerhalb der Hohlwelle bewegte optische Elemente kann vorteilhaft für große Linsendurchmesser genutzt werden. Die Zylinderspule steht im System fest und wirkt als Stator. Auf diese Weise kann auf den Einsatz von Schleifkontakten zur Übertragung der elektrischen Energie in die Spulen verzichtet werden. Diese Maßnahme gewährleistet einen geräuscharmen Motor.

Die Spule kann beispielsweise aus zwei zu Zylindern geformten Blechen bestehen, wobei in die Bleche zum Beispiel aus Kupferlegierungen bestehende und per Laser- oder Ätzverfahren erzeugte Leiterbahnstrukturen eingebracht werden. Die Zylinder werden zueinander mit Hilfe einer zusätzlichen elektrisch isolierenden Zwischenschicht, zur Bildung eines sogenannten "Composit Stators" ineinander gesteckt. Per Durchkontaktierung zwischen innerem und äußerem Zylinder werden Windungen erzeugt. Anschließend kann der aus labilen Teilspulen gebildete Zylinder-Körper mit einem Trägermaterial zur Erhöhung der mechanischen Stabilität (Festigkeit) vergossen werden.

Alternativ können Spulenelemente aus Draht auf einem zylindrischen Hilfskörper gewickelt werden. Die Spulen können anschließend mit einem Trägermaterial, zum Beispiel Epoxidharz oder faserverstärktem Fiberglas, vergossen werden.

Auf diese Weise lassen sich 3 oder auch mehrere Spulenelemente innerhalb des Zylinderkörpers realisieren. Beispielsweise können Durchkontaktierungen nach einem 3-fach versetzten Schema gesetzt werden, bei dem jede versetzt dritte Windung miteinander verbunden wird. Auf diese Weise werden 3 separate Phasen, bzw. Spulen in einem formstabilen, schlanken Zylinderkörper gebildet.

Mit diesem Verfahren entsteht eine sehr schlanke und formstabile, aus einzelnen Spulenelementen gebildete, dünne röhrenförmige Spulenanordnung, die an ihrer Stirnseite mehrere Kontakte zur Zuführung von Steuerströmen aufweist.

Die einzelnen Spulenelemente sind in regelmäßigen Abständen auf dem Umfang des Zylinders verteilt und bilden auf diese Weise eine Zylinderspule.

Die Zylinderspule wird dabei aus separat ansteuerbaren Einzel-Windungen oder in Gruppen zusammengefassten Gruppenspulen gebildet, wobei die Einzel-Windungen oder Gruppenspulen mit alternierenden, phasenverschobenen Steuerströmen aus einer nicht weiter dargestellten elektrischen Steuerung in bekannter Weise zur Erzeugung eines wandernden elektromagnetischen Feldes angesteuert werden.

Die Anzahl der Gruppenspulen kann an die auf dem Umfang des Rotors mit alternierenden Polaritäten angeordneten Magnete und an eine geforderte Genauigkeit eines Drehmoments angepasst sein.

Es kann ein bürstenloser rotatorisch positionierbarer permanentmagneterregter Gleichstrommotor realisiert werden.

Zum Beispiel kann mit 3 phasenverschobenen alternierend geschalteten Gleichströmen an 3 Spulengruppen ein sich drehendes Magnetfeld erzeugt werden, dem der mit Magneten bestückte Rotor folgt. Die 3 Spulengruppen können dabei an die alternierend in dem Rotor und gleichmäßig über seinen Umfang verteilten Magnete angepasst sein.

Die Zylinderspule kann beispielsweise nach dem Europäischen Patent EP 1 166 424 B1 ausgebildet und gefertigt sein. Der Betrieb und die Ansteuerung einer dort beschriebenen Zylinderspule sind dort ebenfalls offenbart. Eine weitere Ausführungsform einer solchen dünnwandigen Zylinderspule ist der EP 1 841 048 A2 zu entnehmen und ist ein Beleg für die Ausführbarkeit der vorliegenden Erfindung. Auf die in diesen Druckschriften gemachten Inhalte wird ausdrücklich Bezug genommen.

Ein aus den Elementen der beschriebenen dünnen Spule als Stator und einem mit Permanent-Magneten bestückter Rotor bestehender bürstenloser Motor ist in US 2007/0200452 A1 beschrieben. Zur verbesserten zeitlichen Steuerung von dreiphasigen Ansteuersignalen am Stator ist die feste Anordnung von Halleffekt-Sensoren am Stator vorgesehen.

Zur axialen Positionsbestimmung der verschiebbaren optischen Elemente, wie zum Beispiel eines Fokussierglieds, sind inkrementell oder absolut messende Systeme in oder an der Fassung vorgesehen.

Zur Detektion der Endposition kommen Endlagesensoren zur Anwendung.

Unter Endlagensensoren sind Sensoren zur Detektion der Endstellungen in axialer Richtung zu verstehen, wobei Lichtschranken, induktive oder kapazitive Näherungssensoren oder mechanische Taster zur Anwendung kommen können. Sie können an allen bewegten mechanischen Teilen durch geeignete Kopplung befestigt sein.

Als inkrementell messendes System kann beispielsweise ein an der Objektiv-Fassung ortsfest angeordneter Sensor und ein auf dem Umfang des Fokussiergliedes angebrachtes Taktlineal zur Anwendung kommen.

Ein Ausführungsbeispiel der Erfindung wird anhand der Zeichnung schematisch beschrieben. Dabei zeigen:
- Fig. 1a: ein Objektiv im Querschnitt,
- Fig. 1b: eine Ausschnittsvergrößerung daraus,
- Fig. 1c: eine weitere Vergrößerung des Ausschnitts,
- Fig. 2a: eine Variante des Objektivs nach Fig. 1 im Querschnitt,
- Fig. 2b: eine Ausschnittsvergrößerung daraus,
- Fig. 2c: eine Darstellung der Anordnung mit Permanentmagnet-Elementen,
- Fig. 3: eine weitere Variante im Berich des Hohlwellenantriebs,
- Fig. 4: eine Ansicht der Linearführung,
- Fig. 5: eine Ansicht auf den Kurventräger mit Taktlineal,
- Fig. 6: eine perspektivische Darstellung des Kurventrägers mit Taktlineal,
- Fig. 7: eine perspektivische Darstellung der Fassung der Variante nach Fig. 2,
- Fig. 9: eine Ansicht auf den Kurventräger des Objektivs im Querschnitt und

Fig. 10 eine Prinzip-Darstellung des Objektivs im Querschnitt.

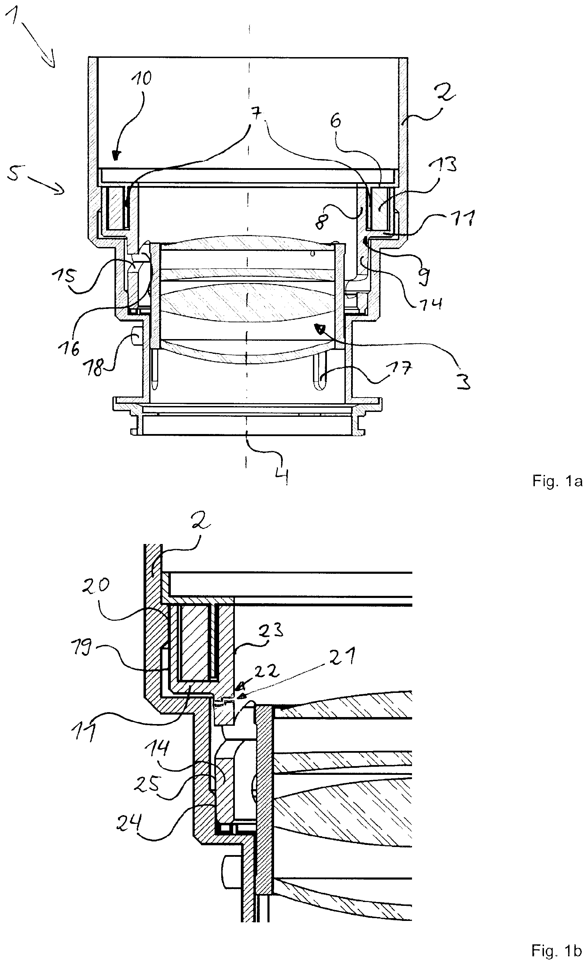

Figur 1a zeigt ein Objektiv 1 mit einer Fassung 2, in der ein optisches Element 3 entlang einer optischen Achse 4 elektromotorisch axial verschiebbar gelagert ist. Zur Verstellung des optischen Elements 3 ist ein die optische Achse 4 ringförmig umgreifender Hohlwellenantrieb 5 vorgesehen.

Der Hohlwellenantrieb 5 besteht aus einem mit der Fassung 2 ortsfest verbundenem Stator 6 mit einer zylinderförmigen dünnwandigen Spule 7 und einem als drehbar gelagerte Hohlwelle 8 ausgebildetem Rotor 9.

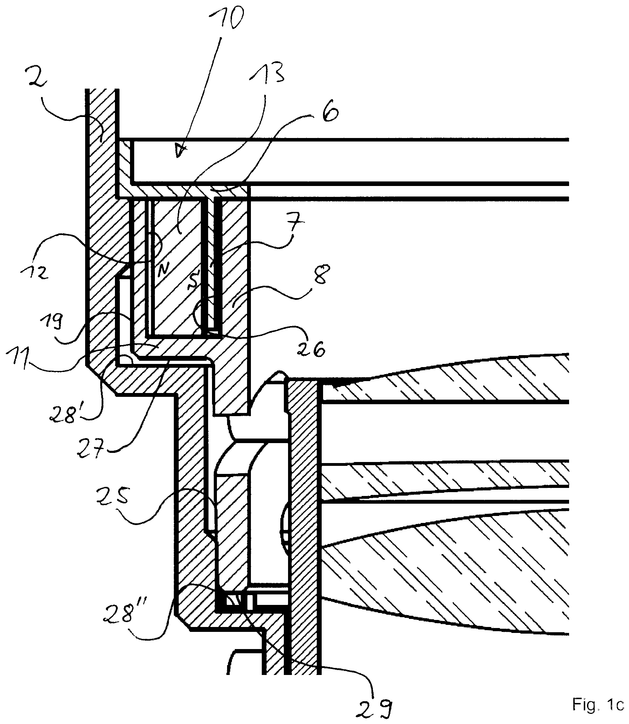

An die Außenwand der Hohlwelle 8 ist ein eine umlaufende Nut 10 bildendes Zylinderelement 11 aus weichmagnetischem Material angeformt. An der in Fig. 1c genauer dargestellten Innenwandfläche 12 des Zylinderelements 11 sind in der Nut 10 Permanent-Magnete 13 zur elektromagnetischen Wechselwirkung mit der Spule 7 angeordnet. Durch das Zylinderelement 11 mit Magneten 13 und Spule 7 wird ein magnetischer Kreis gebildet. Die Spule 7 ist koaxial zur Drehachse der Hohlwelle 8 in der Nut 10 angeordnet. Die Drehachse der Hohlwelle 8 ist mit der optischen Achse 4 identisch. Der Hohlwellenantrieb 5 weist einen Kurventräger 14 auf.

In den Kurventräger 14 ist eine Kurvenkontur 15 auf dem Umfang in axialer Richtung ansteigend eingebracht, in die mit dem optischen Element 3 verbundene Führungselemente 16 eingreifen. Das optische Element 3 steht gleichzeitig mit einer parallel zur optischen Achse 4 angeordneten Linearführung 17 durch Linearführungselemente 18 in Wirkverbindung und wird an einer Drehung um die optische Achse 4 gehindert. Beim Drehen des Kurventrägers 14 wird auf diese Weise das optische Element 3 ohne rotatorische Drehung in axialer Richtung entlang der optischen Achse 4 verschoben.

Figur 1b zeigt eine Ausschnittvergrößerung des Hohlwellenantrieb 5 aus Figur 1a.

In der Fassung 2 ist die äußere Umfangfläche 19 des Zylinderelements 11 drehbar gelagert. Dazu weist die Fassung 2 an ihrer Innenfläche einen angeformten Gleitbereich 20 auf. Der Kurventräger 14 ist im Gegensatz zur Darstellung in Fig. 1a, bei der er mit der Innenfläche 23 der Hohlwelle 8 verbunden ist, vorliegend über eine Adapterverbindung 21 auswechselbar mit der Stirnfläche 22 der Hohlwelle 8 verbunden. Die Drehlagerung der Hohlwelle 8 kann auch über eine weitere an der Innenfläche der Fassung 2 angeordnete Gleitfläche 24 für den Kurventräger 14 erfolgen. In diesem Ausführungsbeispiel ist die Außenfläche 25 des Kurventrägers 14 an der Gleitfläche 24 der Fassung 2 drehbar und gegen axiales Spiel sicher gelagert.

Fig. 1c zeigt eine weitere Ausschnittsvergrößerung der Figuren 1a und 1b. Der Aufbau im Bereich des Hohlwellenantriebs 5 wird verdeutlicht. An der Innenwandflächen 12 des Zylinderelements 11 in der Nut 10 sind hier Magnete 13 angeordnet. Die Ausrichtung der Polarität ist mit N und S dargestellt und verläuft in radialer Richtung, also von innen nach außen. Der Spalt zwischen Innenwandfläche 12 und Magnet 13 ist mit einem eine Verbindung zwischen Magnet 13 und Innenwandfläche 12 herstellenden Klebstoff gefüllt. In einem Luftspalt zwischen Magnet 13 und Außenwandfläche 26 der Hohlwelle 8 des Zylinderelements 11 ist die Spule 7 eingesetzt. Die Spule 7 ist mit einem die Nut 10 abdeckenden Stator 6 verbunden, der in die Fassung 2 eingeschraubt ist.

In axialer Richtung ist das Zylinderelement 11 mit seiner äußeren Bodenfläche 27 auf einem Vorsprung 28' gelagert. Zusätzlich oder alternativ kann die axiale Lagerung auch an einem Vorsprung 28" korrespondierend zur Stirnfläche 29 des Kurventrägers 14 erfolgen. Das Widerlager hierzu erfolgt zwischen Zylinderelement 11 und Stator 6.

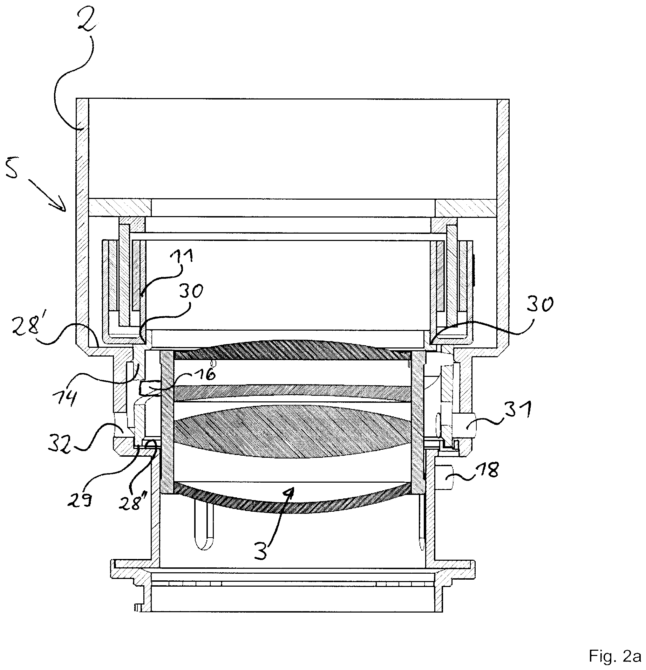

In Figur 2a ist eine Variante des erfindungsgemäßen Hohlwellenantriebs 5 dargestellt. In dieser Ausführungsform ist das die umlaufende Nut 10 bildende Zylinderelement 11 als separates Bauteil ausgeführt und in eine am Kurventräger 14 in dem der Stirnfläche 29 gegenüberliegenden Ende des Kurventrägers 14 eingeformte Kurventrägernut befestigt. An dieser, die Funktion der in Fig. 1b beschriebenen Adapterverbindung 21 wahrnehmenden Stelle, kann in einfacher Weise ein Austausch von verschiedenen Kurventrägern 14 erfolgen. In Figur 2a erfolgt keine axiale Lagerung des aus Zylinderelement 11 und Kurventräger 14 gebildeten Rotors 9 an Vorsprüngen 28' und 28" in der Fassung 2 wie in Figur 1 dargestellt. In dieser Ausführungsform erfolgt die axiale Lagerung über Führungselemente 31, die mit einer in die Fassung 2 eingebrachten Umfangskurve 32 in Eingriff stehen. Vorzugsweise sind 3 Führungselemente 31, beispielsweise als Zylinderrollen ausgeführt, um 120° versetzt am Umfang des Kurventrägers 14 vorgesehen.

Diese Art der axialen Lagerung des Rotors 9 kann auch in den Ausführungsformen nach Fig. 1 zur Anwendung kommen, wobei die Führungselemente 31 vorzugsweise im Bereich der Stirnfläche 29 des Kurventrägers 14 vorgesehen sind.

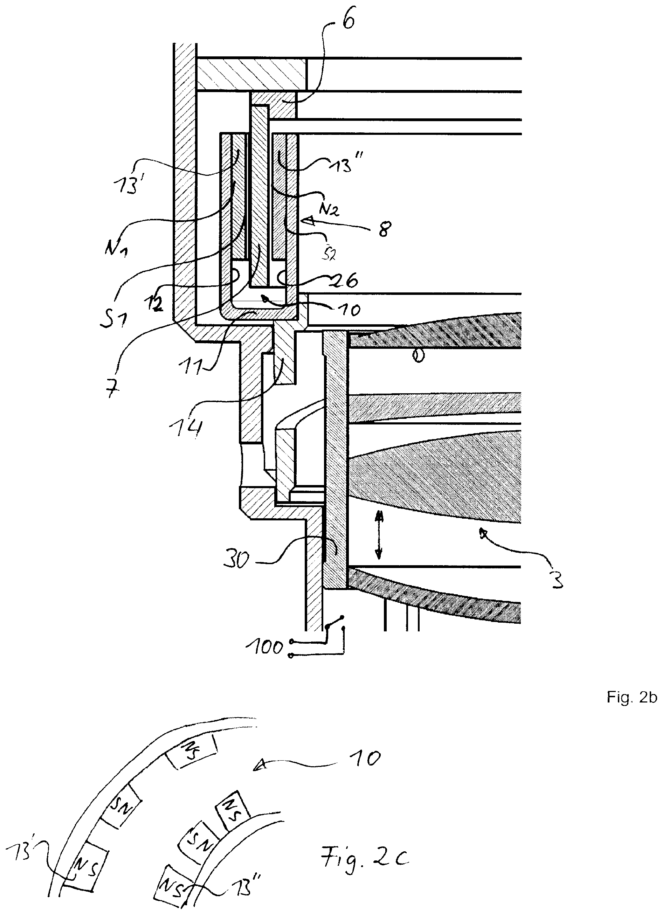

Fig. 2b zeigt eine weitere Ausschnittsvergrößerung zur Verdeutlichung der Positionierung der Magnete 13', 13". Die Polarität der Magnete ist mit N1, S1 des Magneten 13' und N2, S2 des Magneten 13" dargestellt um die Richtung des magnetischen Flusses zu verdeutlichen. Die Fassung 30 des optischen Elements ist in Richtung der Pfeile verschiebbar gelagert. Zur Detektion einer Endstellung der axialen Verschiebung des optischen Elements 3 ist ein der Fassung 30 zugeordneter Endlagesensor 100 schematisch dargestellt.

Die alternierende Anordnung der Polarität weiterer am Umfang der Nut 10 angeordneter Magnete 13,', 13" ist schematisch in Fig. 2c dargestellt.

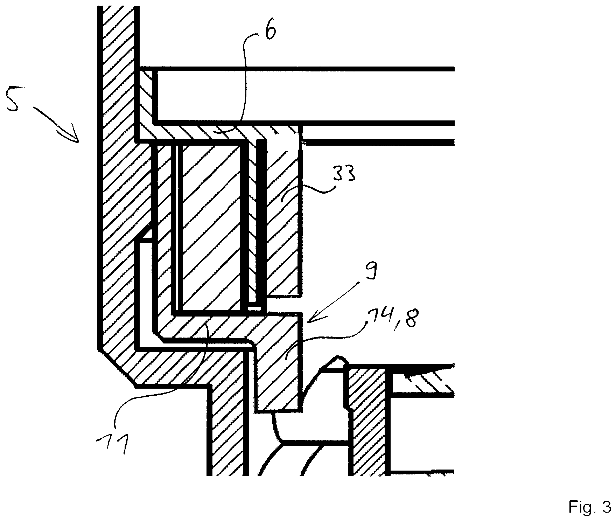

Die verschiedenen Ausführungsbeispiele zeigen, dass die Erfindung nicht auf einen Hohlwellenantrieb 5 der Ausführung nach der Fig. 1a beschränkt ist, bei der der Rotor 9 einstückig, bestehend aus funktionell gekennzeichneten Teilbereichen, wie Zylinderelement 11, Hohlwelle 8 und Kurventräger 14 ausgebildet sein kann, sondern auch in der Art nach Fig. 1b, bei der der Kurventräger 14 (nicht mehr als angeformter Teil an der Hohlwelle 8) sondern über eine Adapterverbindung 21 von der Hohlwelle 8 lösbar ist. In dieser Ausführung bildet der Innenumfang des Zylinderelements 11 funktionell die Hohlwelle 8 an der der Kurventräger 14 befestigbar ist. Eine weitere Ausführungsform der Erfindung, bei der die rotatorisch bewegte Masse vorteilhaft reduziert ist, zeigt Fig. 3.

Das Zylinderteil 33, welches den Innenumfang des Zylinderelements 11 (in Fig. 1 und 2) bildet, ist in dieser Ausführungsform vom Zylinderelement 11 separiert und zusammen mit der Spule 7 am Stator 6 und somit nicht mehr drehbar befestigt. Der in den Ausführungen nach Fig. 1 und 2 definitionsgemäße Bereich der Hohlwelle 8 fällt in dieser Variante funktionell mit dem Kurventräger 14 zusammen. Der Bereich Hohlwelle 8/Kurventräger 14 ist am drehbar gelagerten Zylinderelement 11 befestigt oder angeformt und bildet auf diese Weise den Rotor 9. Das Zylinderteil 33 und das Zylinderelement 11 bilden zusammen die vorstehend bezeichnete Nut 10.

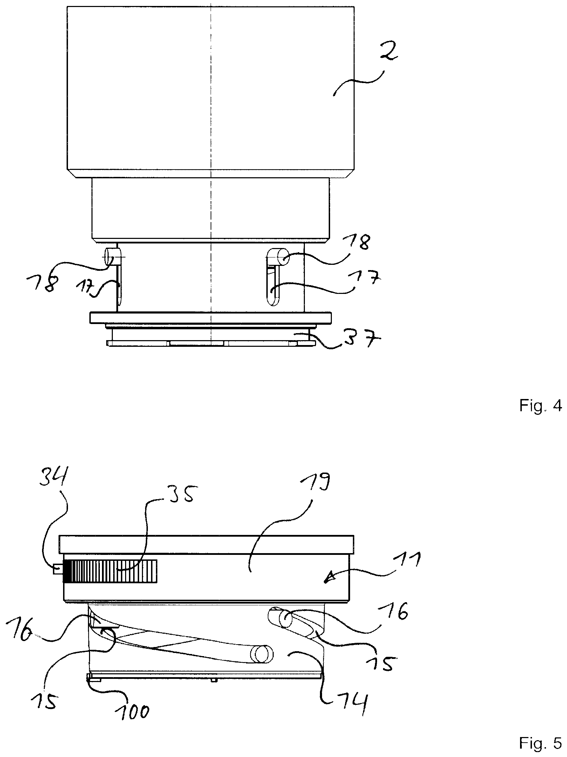

In Fig. 4 ist die Fassung 2 schematisch dargestellt. Linearführungselemente 18 für das optische Element 3 sind in Linearführungen 17 axial verschiebbar gelagert.

Fig. 5 zeigt schematisch einen inkrementell oder absolut messenden Sensor 34, der an der in dieser Figur nicht dargestellten Fassung 2 befestigt ist. Der Sensor 34 wirkt mit dem auf dem Umfang des zylindrischen Elements 11 angeordneten Taktlineal 35 zusammen und erzeugt Signale zur Bestimmung der rotatorischen Stellung des Zylinderlements 11. Zusammen mit der Steigung der Kurvenkontur 15 im Kurventräger 14 kann die axiale Position des hier nicht dargestellten optischen Elements 3 bestimmt werden. Das optische Element 3 wird durch die in die Kurvenkontur 15 eingreifenden Führungselemente 16 bei einer Drehung des Kurventrägers 14 axial verschoben. Die Signale des Sensors 34 können zusammen mit einer hier nicht dargestellten Steuer- und Regelelektronik für den Hohlwellenantrieb 5 als axiale Positioniereinrichtung für optische Elemente genutzt werden.

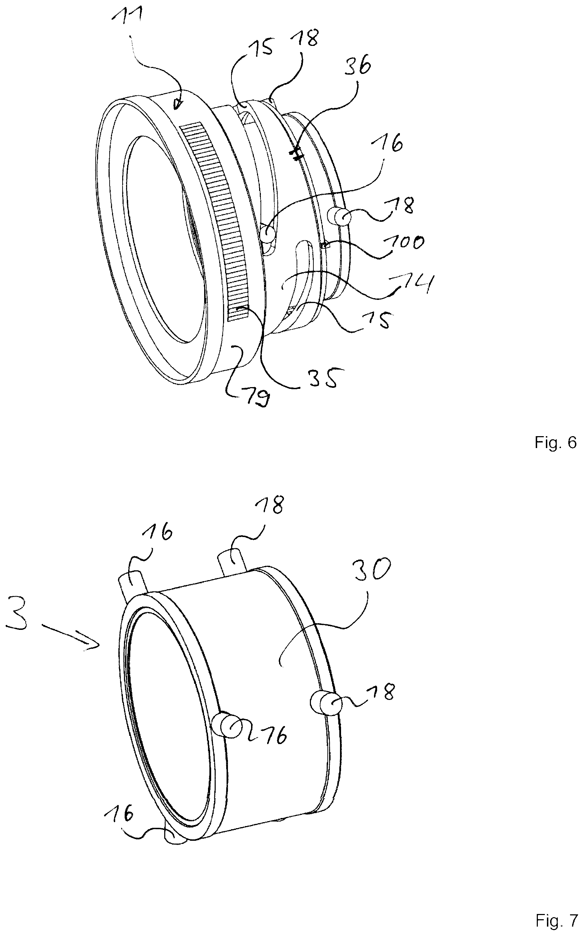

In Fig. 6 ist eine perspektivische Ansicht des Zylinderelements 11 dargestellt, auf dessen äußerer Umfangsfläche 19 das Taktlineal 35 angeordnet ist. Die Führungselemente 16 laufen in der Kurvenkontur 15 zur axialen Verschiebung des im Inneren gelagerten optischen Elements 3. Die Linearführungselemente 18 wirken mit der hier nicht dargestellten Linearführung 17 zusammen. Ein Endlagesensor 100 ist als Mikrotaster oder optischer Unterbrecher einer Gabellichtschranke 36 ausgeführt.

Fig. 7 zeigt die Fassung 30 des optischen Elements 3 als offenen Hohlzylinder. Im Bereich der jeweiligen Stirnflächen sind die Führungselemente 16 für den Eingriff in die Kurvenkontur 15 des Kurventrägers 14 und die Linearführungselemente 18 für den Eingriff in die Linearführung 17 der Fassung 2 dargestellt.

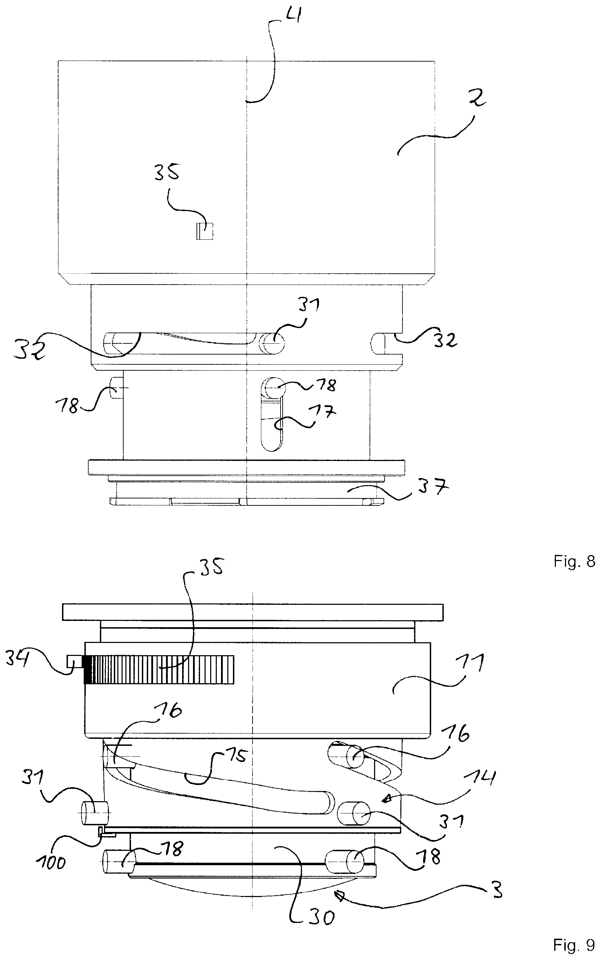

In Fig. 8 ist eine Fassung 2 einer Bauartvariante nach Fig. 2 mit axialer Lagerung des hier nicht dargestellt Rotors in einer Umfangskurve 32 dargestellt. In der Fassung 2 ist ein Sensor 34 für die inkrementelle Sensorik zur Erfassung der rotatorischen Position des Rotors eingebracht. In die Fassung 2 sind drei Segmente einer Umfangskurve 32 eingeformt. In der Umfangskurve 32 sind mit dem hier nicht dargestellten Kurventrägers 14 verbundene Führungselemente 31 zur axialen Lagerung geführt. Die Umfangskurve 32 ist an der Fassung 2 normal zur optischen Achse 4 am Umfang eingeformt, während die Linearführung 17 orthogonal dazu und parallel zur optischen Achse 4 verläuft. In der Linearführung sind Linearführungselemente 18 gelagert. Im unteren Bereich der Fassung 2 ist ein Bajonett 37 zur Ankoppelung an eine nicht weiter dargestellte Kamera befestigt.

Fig. 9 zeigt das zylindrische Element 11 mit Taktlineal 35 und dem an der vorliegend nicht dargestellten Fassung 2 befestigten Sensor 34. In den Kurventräger 14 sind Kurvenkonturen 15 eingeformt. In den Kurvenkonturen sind Führungselementen 16, die an der Fassung 30 befestigt sind geführt. Am Kurventräger 14 sind Führungselemente 31 befestigt, die in die hier nicht dargestellte Umfangskurve 32 der Fassung 2 eingreifen. An dem Kurventräger ist ein Endlagesensor 100 befestigt. Die Fassung 30 des optischen Elements 3 weist Linearführungselementen 18 auf, die in hier nicht dargestellte Linearführungen 17 eingreifen.

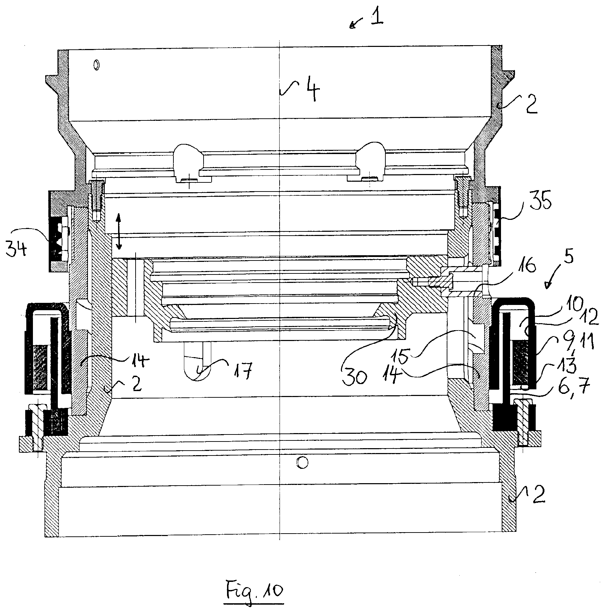

Fig. 10 zeigt eine Prinzipdarstellung des Objektivs 1 mit allen funktionswesentlichen Teilen im Querschnitt. In einer äußeren Fassung 2 des Objektivs 1 sind in einer inneren Fassung 30 optischen Elemente 3 gehalten. Die innere Fassung 30 ist in einer in der äußeren Fassung 2 vorhandenen Linearführung 17 geradegeführt und in einem Kurventräger 14 in einer Kurvenkontur 15 über Führungselemente 16 axial verschieblich gelagert. Der Kurventräger 14 ist elektromotorisch zur Rotation antreibbar.

Als Antrieb für den Kurventräger ist ein Hohlwellenantrieb 5 vorhanden.

Der Rotor 9 des Hohlwellenantriebs 5 ist mit dem Kurventräger 14 verbunden. Der Stator 6 des Hohlwellenantiebs 5 ist mit der äußeren Fassung 2 ortsfest verbunden. Der Rotor 9 ist als Zylinderlement 11 in Form einer umlaufenden Nut 10 ausgebildet. An mindestens einer Innenwandfläche 12 des Zylinderlementes 11 sind Permanentmagnet-Elemente 13 angeordnet.

Der Stator 6 des Hohlwellenantriebs 5 besteht aus einer dünnwandigen zylinderförmigen Spule 7, die zur elektromagnetischen Wechselwirkung mit den Magnet-Elementen 13 koaxial zur optischen Achse 4 als Drehachse des Kurventrägers 14 in die Nut 10 eintaucht.

Schutz wird nicht alleine für die hier dargestellten Ausführungsformen beantragt, wenngleich die vorgestellten und beschriebenen Varianten die am universellsten einsetzbaren sind. Da die elektrischen Anschlussleitungen an dem nicht bewegten Teil des Hohlwellenantriebs, dem Stator angebracht sind, sind grundsätzlich Drehungen von mehr als 360° möglich, sofern nicht Kurven oder andere mechanisches Anschläge die Drehung künstlich beschränken. Mit einem entsprechenden Getriebe und umlaufenden Kurven sind ohne weiteres lange Fokussierhübe oder Verstellungen möglich. In einer nicht weiter beschriebenen Ausführungsform ist es aber ebenso denkbar, dass die elektrischen Zuleitungen am bewegten Teil angeschlossen sind. In diesem Fall wären die Magnete an der Fassung befestigt und ein Teil des Stators und die Spule würden in die umlaufende Nut eintauchen, aber am bewegten Teil des Motors befestigt sein, demnach einen Teil des Rotors bilden. Der mögliche Drehwinkel dieses Hohlwellenmotors ist durch die Länge und Flexibilität der elektrischen Anschlussleitungen für die Steuersignalzuführung zu den Spulen beschränkt.

### Bezugszeichenliste

- 1: Objektiv
- 2: Fassung Objektiv (äußere Fassung)
- 3: optisches Element
- 4: optische Achse
- 5: Hohlwellenantrieb
- 6: Stator
- 7: Spule
- 8: Hohlwelle
- 9: Rotor
- 10: Nut
- 11: Zylinderelement
- 12: Innenwandfläche
- 13,13',13": Permanent-Magnete
- 14: Kurventräger
- 15: Kurvenkontur
- 16: Führungselement
- 17: Linearführung
- 18: Linearführungelement
- 19: äußere Umfangsfläche
- 20: Gleitbereich
- 21: Adapterverbindung
- 22: Stirnfläche Hohlwelle
- 23: Innenfläche
- 24: Gleitfläche
- 25: Außenfläche
- 26: Außenwandfläche
- 27: äußere Bodenfläche
- 28', 28": Vorsprung
- 29: Stirnfläche Kurventräger
- 30: Fassung optische Elemente (innere Fassung)
- 31: Axial-Führungselement
- 32: Umfangskurve
- 33: Zylinderteil
- 34: Sensor
- 35: Taktlineal
- 36: Gabellichtschranke
- 37: Bajonett
- 100: Endlagensensor

## Patentansprüche

1. Objektiv (1) mit einer äußeren Fassung (2) und darin in einer inneren Fassung (30) gehaltenen optischen Elementen (3), wobei die innere Fassung (30) in der äußeren Fassung (2) geradegeführt und in einem Kurventräger (14) axial verschiebbar gelagert ist und der Kurventräger (14) elektromotorisch antreibbar ist, **dadurch gekennzeichnet, dass** als Antrieb für den Kurventräger (14) ein Hohlwellenantrieb (5) vorhanden ist, der aus einem mit dem Kurventräger (14) verbundenen Rotor (9) und einem mit der äußeren Fassung (2) verbundenen Stator (6) besteht, wobei der Rotor (9) als ein eine umlaufende axiale Nut (10) bildendes Zylinderelement (11) mit an mindestens einer Innenwandfläche der Nut (10) angeordneten Permanentmagnet-Elementen (13, 13', 13") ausgebildet ist und der Stator (6) aus einer zylinderförmigen Spule (7) besteht, die zur elektromagnetischen Wechselwirkung mit den Magnet-Elementen (13, 13', 13") koaxial zur Drehachse des Kurventrägers (14) in axialer Richtung ortsfest in die Nut (10) eingesetzt ist.

2. Objektiv nach Anspruch 1, **dadurch gekennzeichnet, dass** die Drehachse des Kurventrägers (14) mit der optischen Achse (4) des Objektivs (1) übereinstimmt und die Bewegung der optischen Elemente (3) linear bidirektional entlang der optischen Achse (4) erfolgt.

3. Objektiv nach Anspruch 1 oder 2, **dadurch gekennzeichnet, dass** der Kurventräger (14) mit einer Stirnfläche (22) des Rotors (9) verbunden ist.

4. Objektiv nach einem der vorhergehenden Ansprüche, **dadurch gekennzeichnet, dass** der Kurventräger (14) auswechselbar mit der Stirnfläche (22) des Rotors (4) verbunden ist.

5. Objektiv nach einem der vorhergehenden Ansprüche, **dadurch gekennzeichnet, dass** die äußere Umfangsfläche des Zylinderelements (11) oder eine Außenfläches des Kurventrägers (14) drehbar in der äußeren Fassung (2) gelagert sind.

6. Objektiv nach einem der vorhergehenden Ansprüche, **dadurch gekennzeichnet, dass** die äußere Bodenfläche (27) des Zylinderelements (11) zur axialen Ausrichtung des Hohlwellenantriebs (5) an einem Vorsprung (28') in der äußeren Fassung (2) aufliegt, wobei der Stator (6) die offene Seite der Nut (10) abdeckt.

7. Objektiv nach einem der Ansprüche 1 bis 5, **dadurch gekennzeichnet, dass** am Kurventräger (14) oder der äußeren Umfangsfläche (19) des Zylinderelements (11) Führungselemente (31) angeordnet sind, die in mindestens eine korrespondierend in der äußeren Fassung (2) eingeformte normal zur optischen Achse (4) verlaufende Umfangskurve (32) zur axialen Lagerung des Kurventrägers (14) und/oder des Rotors (9) eingreifen.

8. Objektiv nach einem der vorhergehenden Ansprüche, **dadurch gekennzeichnet, dass** in der Nut (10) beidseitig an der Innenwandfläche (12) des Zylinderelements (11) Magnete (13, 13', 13") mit alternierender Polarität (N/S) derart angeordnet sind, dass zwischen ihnen ein Luftspalt zur Aufnahme der zylinderförmigen Spule (7) des Stators (6) gebildet ist.

9. Objektiv nach einem der vorhergehenden Ansprüche, **dadurch gekennzeichnet, dass** absolut messende Endlagensensoren (100) zur Detektion der Endpositionen der optischen Elemente(3) in axialer Richtung (4), und inkrementell oder absolut messende Systeme (34) zur eindeutigen Erfassung der axialen Zwischenpositionen des Kurventrägers (14) in oder an der äußeren Fassung (2) vorhanden sind.

10. Objektiv nach einem der vorhergehenden Ansprüche, **dadurch gekennzeichnet, dass** die Kraft- und Bewegungsübertragung zwischen Hohlwellenantrieb (5) und axial zu verschiebenden optischen Elementen (3) als Direktantrieb ohne Über- oder Untersetzungsgetriebe ausgebildet ist.

## Claims

1. Lens (1) having an outer mount (2) and optical elements (3) which are secured therein in an internal mount (30), wherein the internal mount (30) is guided linearly in the outer mount (2) and is mounted in an axially displaceable fashion in a cam carrier (14) and the cam carrier (14) can be driven by electric motor, **characterized in that** a hollow shaft drive (5) is present as a drive for the cam carrier (14), which hollow shaft drive (5) is composed of a rotor (9) which is connected to the cam carrier (14) and of a stator (6) which is connected to the outer mount (2), wherein the rotor (9) is embodied as a cylinder element (11) which forms a circumferential axial groove (10) and has permanent magnet elements (13, 13', 13'') which are arranged on at least one inner wall face of the groove (10), and the stator (6) is composed of a cylindrical coil (7) which is inserted in the axial direction in a positionally fixed fashion into the groove (10) in order to interact electromagnetically with the magnet elements (13, 13', 13'') coaxially with respect to the rotational axis of the cam carrier (14).

2. Lens according to Claim 1, **characterized in that** the rotational axis of the cam carrier (14) corresponds to the optical axis (4) of the lens (1), and the movement of the optical elements (3) occurs in a linearly bidirectional fashion along the optical axis (4).

3. Lens according to Claim 1 or 2, **characterized in that** the cam carrier (14) is connected to an end face (22) of the rotor (9).

4. Lens according to one of the preceding claims, **characterized in that** the cam carrier (14) is connected in an exchangeable fashion to the end face (22) of the rotor (4).

5. Lens according to one of the preceding claims, **characterized in that** the outer circumferential face of the cylinder element (11) or an outer face of the cam carrier (14) is rotatably mounted in the outer mount (2).

6. Lens according to one of the preceding claims, **characterized in that** the outer base face (27) of the cylinder element (11) rests, for the purpose of axially orienting the hollow shaft drive (5), on a projection (28') in the outer mount (2), wherein the stator (6) covers the open side of the groove (10).

7. Lens according to one of Claims 1 to 5, **characterized in that** guide elements (31) are arranged on the cam carrier (14) or the outer circumferential face (19) of the cylinder element (11), which guide elements (31) engage in at least one circumferential cam (32) which is integrally formed correspondingly in the outer mount (2) and runs perpendicularly with respect to the optical axis (4), for the purpose of axially mounting the cam carrier (14) and/or the rotor (9).

8. Lens according to one of the preceding claims, **characterized in that** magnets (13, 13', 13'') with alternating polarity (N/S) are arranged in the groove (10) on both sides of the inner wall face (12) of the cylinder element (11) in such a way that an air gap for receiving the cylindrical coil (7) of the stator (6) is formed between them.

9. Lens according to one of the preceding claims, **characterized in that** end position sensors (100) which measure absolutely and have the purpose of detecting the end positions of the optical elements (3) in the axial direction (4), and incrementally or absolutely measuring systems (34) for unambiguously sensing the axial intermediate positions of the cam carrier (14) are present in or on the outer mount (2).

10. Lens according to one of the preceding claims, **characterized in that** the means of transmitting force and movement between the hollow shaft drive (5) and the optical elements (3) which are to be shifted axially is embodied as a direct drive without step-up gearing or step-down gearing.

## Revendications

1. Objectif (1), comprenant une monture extérieure (2) et des éléments optiques (3) maintenus dans celle-ci dans une monture intérieure (30), dans lequel la monture intérieure (30) est guidée linéairement dans la monture extérieure (2) et est montée de manière axialement coulissante dans un support de came (14) et le support de came (14) peut être entraîné par un moteur électrique, **caractérisé en ce qu'**un entraînement à arbre creux (5) est présent comme entraînement pour le support de came (14) et est composé d'un rotor (9) relié au support de came (14) et d'un stator (6) relié à la monture extérieure (2), dans lequel le rotor (9) est réalisé comme un élément cylindrique (11) formant une rainure axiale périphérique (10) avec des éléments d'aimant permanent (13, 13', 13") disposés sur au moins une surface de paroi intérieure de la rainure (10), et le stator (6) est composé d'une bobine de forme cylindrique (7) qui est insérée dans la rainure (10) de manière fixe dans la direction axiale, coaxialement à l'axe de rotation du support de came (14), pour une interaction électromagnétique avec les éléments d'aimant (13, 13', 13").

2. Objectif selon la revendication 1, **caractérisé en ce que** l'axe de rotation du support de came (14) coïncide avec l'axe optique (4) de l'objectif (1), et le mouvement des éléments optiques (3) est effectué de manière linéaire et bidirectionnelle le long de l'axe optique (4).

3. Objectif selon la revendication 1 ou 2, **caractérisé en ce que** le support de came (14) est relié à une surface frontale (22) du rotor (9).

4. Objectif selon l'une quelconque des revendications précédentes, **caractérisé en ce que** le support de came (14) est relié de manière échangeable à la surface frontale (22) du rotor (4).

5. Objectif selon l'une quelconque des revendications précédentes, **caractérisé en ce que** la surface périphérique extérieure de l'élément cylindrique (11) ou une surface extérieure du support de came (14) est montée pivotante dans la monture extérieure (2).

6. Objectif selon l'une quelconque des revendications précédentes, **caractérisé en ce que** la surface de fond extérieure (27) de l'élément cylindrique (11) repose sur une saillie (28') dans la monture extérieure (2) en vue de l'orientation axiale de l'entraînement à arbre creux (5), le stator (6) recouvrant la face ouverte de la rainure (10).

7. Objectif selon l'une quelconque des revendications 1 à 5, **caractérisé en ce que** sur le support de came (14) ou la surface périphérique extérieure (19) de l'élément cylindrique (11) sont disposés des éléments de guidage (31) qui viennent en prise avec au moins une came périphérique (32) formée de manière correspondante dans la monture extérieure (2) et s'étendant perpendiculairement à l'axe optique (4) en vue du montage axial du support de came (14) et/ou du rotor (9).

8. Objectif selon l'une quelconque des revendications précédentes, **caractérisé en ce que** dans la rainure (10), des deux côtés sur la surface de paroi intérieure (12) de l'élément cylindrique (11), des aimants (13, 13', 13") à polarité alternée (N/S) sont disposés de telle sorte qu'un entrefer est formé entre ceux-ci pour recevoir la bobine en forme de cylindre (7) du stator (6) .

9. Objectif selon l'une quelconque des revendications précédentes, **caractérisé en ce que** des capteurs de fin de course à mesure absolue (100) sont présents pour détecter les positions de fin de course des éléments optiques (3) dans la direction axiale (4), et des systèmes (34) à mesure incrémentale ou absolue sont présents pour la détection univoque des positions intermédiaires axiales du support de came (14) dans ou sur la monture extérieure (2).

10. Objectif selon l'une quelconque des revendications précédentes, **caractérisé en ce que** la transmission de force et de mouvement entre l'entraînement à arbre creux (5) et des éléments optiques (3) à déplacer axialement est réalisée sous forme d'entraînement direct sans dispositif démultiplicateur ou réducteur.
